# EUROPÄISCHE PATENTSCHRIFT

(11) **EP 2 532 729 B1**
(45) Veröffentlichungstag und Bekanntmachung des Hinweises auf die Patenterteilung: **05.09.2018**
(21) Anmeldenummer: 12004368.2
(22) Anmeldetag: 08.06.2012
(51) Int. Cl.: C10L 3/06, C10L 3/08, B01D 53/14

(54) **VERFAHREN ZUM BEREITSTELLEN EINES IN EIN GASNETZ EINSPEISBAREN GASGEMISCHES UND DAFÜRGEEIGNETE ANLAGE**
METHOD FOR PROVIDING A GAS MIXTURE THAT CAN BE FED INTO A GAS GRID AND ACCOMPANYING ASSEMBLY
PROCÉDÉ DE PRÉPARATION D'UN MÉLANGE GAZEUX INJECTABLE DANS UN RÉSEAU DE GAZ ET INSTALLATION À CET EFFET

(30) Priorität: 10.06.2011 DE 102011103994
(43) Veröffentlichungstag der Anmeldung: 12.12.2012
(73) Patentinhaber: Hitachi Zosen Inova Etogas GmbH, 70565 Stuttgart (DE)
(72) Erfinder: Buxbaum, Martin, 6861 Alberschwende (AT); Engelke, Stephan, 27404 Zeven (DE)
(74) Vertreter: Leinweber & Zimmermann

(56) Entgegenhaltungen:
- WO-A1-2010/019763
- DE-A1-102008 025 224
- GB-A- 1 391 034
- US-A1- 2005 072 300

## Beschreibung

Die Erfindung betrifft ein Verfahren und eine Anlage zum Bereitstellen zweier methanreicher Gasströme. Zunächst wird jedoch beschrieben ein Verfahren zum Bereitstellen eines in ein Gasnetz einspeisbaren Gasgemisches mit sehr hohem Methangehalt, bei dem das Gasgemisch gemäß Einspeisebedingungen konditioniert wird, denen das Gasnetz unterliegt, sowie eine für das Verfahren geeignete Anlage, das/die in Kombination mit dem Verfahren gemäß der vorliegenden Erfindung einsetzbar ist.

Derartige Verfahren und Anlagen sind gut bekannt und kommen überall dort zum Einsatz, wo "künstliches" Erdgas erzeugt wird und in ein Gasnetz gemäß den dafür geltenden Bestimmungen (den Normen DVGW G260/262) eingespeist werden soll. Als Beispiel ist eine Biogasanlage zu nennen, in welcher zunächst ein z.B. ca. 60% Methan und 40% Kohlendioxid (weitere Bestandteile hier vernachlässigt) enthaltendes Rohbiogas erzeugt wird, das anschließend durch Abtrennen eines Großteils des enthaltenen Kohlendioxids in einer Gasaufbereitung zu Biomethan aufbereitet wird. Die Gasqualität des Biomethans wird daraufhin gemessen, und die für die Einspeisung in das Gasnetz erforderliche Konditionierung (Trocknung, Brennwerteinstellung, Druckanpassung, Odorierung) entsprechend vorgenommen, um das Biomethan als Austauschgas oder als Zusatzgas in das Gasnetz einzuspeisen.

In verfahrenstechnischer Hinsicht kann man vorsehen dass zur Bildung des Gasgemisches vor dessen Konditionierung wenigstens zwei Gasströme zusammengeführt werden, von denen ein erster Gasstrom neben einer durch katalytische Methanisierung erzeugten Methanmenge noch einen wenigstens eine Komponente in einem auf den ersten Gasstrom bezogen ersten Anteil aufweisenden Rest enthält und ein zweiter Gasstrom einen sehr hohen Methangehalt hat, wobei ein auf das Gasgemisch nach der Zusammenführung bezogener zweiter Anteil der Restkomponente geringer als der erste Anteil ist, und/oder der relative Methangehalt des Gasgemisches nach der Zusammenführung gegenüber dem des ersten Gasstroms erhöht ist.

Mit einer Konditionierung eines durch Zusammenführung von zwei aus unterschiedlichen Quellen stammenden Gasströmen entstandenen Gasgemisches kann eine für die Zwecke der Einspeisung als unerwünschte Eigenschaft der Zusammensetzung eines Gasstroms durch Zusammenführung mit dem bezüglich dieser Eigenschaft andere Eigenschaften aufweisenden anderen Gasstroms kompensiert werden. Eine solche Eigenschaft könnte den Methangehalt in den einzelnen Gasströmen und dem daraus zusammengeführten Gasgemisch selbst betreffen, als durchaus ebenfalls wesentlich wird jedoch auch der Anteil einer unterschiedlichen Restkomponente angesehen, insbesondere der Wasserstoffanteil. Es kann ein Gasgemisch außerhalb des durch das chemische Gleichgewicht der Methanisierungsreaktion vorgegebenen Bereiches erzeugt werden.

Einer der beiden Gasströme geht aus der katalytischen Methanisierung eines Eduktgases hervor und weist nach dem Austritt aus dem Methanisierungsreaktor neben Methan als Hauptkomponenten im Wesentlichen noch Kohlendioxid und Wasserstoff auf.

Dieser Wasserstoffanteil des ersten Gasstroms vor Zusammenführung kann bereits 6% oder geringer, bevorzugt 4% oder geringer, insbesondere 3% oder geringer sein. Für den Methangehalt des ersten Gasstroms vor der Zusammenführung wird dagegen ein Gehalt von 92% oder höher, bevorzugt 94% oder höher, insbesondere 96% oder höher als förderlich angesehen. Insbesondere ist trotz dieser bereits die einschlägigen Normen erfüllenden ersten Gasstroms noch eine über die verlangten Normen hinaus verbesserte Gasqualität durch die erfindungsgemäße Zusammenführung erreichbar.

Ein weiterer bei Erzeugung des ersten Gasstroms enthaltener Anteil einer weiteren Restkomponente, insbesondere Kohlendioxid, kann vor der Zusammenführung wenigstens teilweise abgetrennt werden, so dass davon im ersten Gasstrom nur noch 4% oder weniger, bevorzugt 2% oder weniger, insbesondere 1% oder weniger verbleibt. Auf diese Weise kann eine besonders hohe Gasqualität durch das entkoppelte Prinzip einerseits der "Verdünnung" der einen Restkomponente und andererseits dem "Ausfiltern" der anderen Restkomponente erreicht werden.

Insbesondere kann dann der Prozess der katalytischen Methanisierung hinsichtlich der dabei erzeugten Produktgaszusammensetzung auf Kosten eines höheren Kohlendioxidgehaltes auf niedrige Wasserstoffgehalte hin gesteuert weren. Dies könnte beispielsweise dadurch geschehen, dass man die stöchiometrischen Verhältnisse des Eduktgases für die bei dessen Methanisierung stattfindenden, in Summe CH₄ bildenden Reaktionen
1) CO + H₂O ↔ CO₂ + H₂, die sogenannte water-gas shift reaction
2) CO + 3 H₂ - CH₄ + H₂O, die CO-Methanisierung und
3) CO₂ + 4 H₂ ↔ CH₄ + 2 H₂O, die CO₂-Methanisierung,
modifiziert, indem das Eduktgas überschüssiges Kohlendioxid erhält. Der CH₄-Gehalt des methanisierten Produktgases selbst ist dagegen durch die Gleichgewichtsbedingung der durch die obigen Gleichungen beschriebenen Reaktionen limitiert.

Für den zweiten Gasstrom wird es hinsichtlich dessen Zusammensetzung bevorzugt, dass ein Methangehalt vor der Zusammenführung von 94% oder höher, bevorzugt 96% oder höher, insbesondere 98% oder höher gegeben ist, und insbesondere Wasserstoff als Restkomponente in einem Anteil von 1% oder weniger, bevorzugt 0,5% oder weniger, insbesondere 0,2% oder weniger vorhanden ist. Um derartig hohe Methangehalte in künstlich erzeugten Erdgas-Substituten zu erhalten, ist ein Abtrennen von Kohlendioxidanteilen aus dem zweiten Gasstrom in der Regel erforderlich. Dazu geeignete Technologien stehen in der Technik bereits mit einem hohen erreichbaren Kohlendioxid-Abtrenngrad zur Verfügung, etwa als Wäsche, bei der CO₂ in Waschflüssigkeit in Lösung geht, verpumpt wird bis zu einer Regenerationseinheit, dort bei der Regeneration freigesetzt wird und zur erneuten CO₂-Aufnahme zur Verfügung steht. Beispielhaft sei eine auf der Aminwäsche beruhende Gasaufbereitung genannt.

Das Mengenverhältnis von dem ersten Gasstrom zu dem zweiten Gasstrom kann bei der Zusammenführung 1:5 oder größer, bevorzugt 1:4 oder größer, insbesondere 1:3 oder größer, und/oder 6:5 oder kleiner, bevorzugt 1:1 oder kleiner, insbesondere 2:3 oder kleiner sein. Auf diese Weise kann bei entsprechend geringen Wasserstoffgehalten im zweiten Gasstrom und passender Steuerung der katalytischen Methanisierung ein zufriedenstellend geringer Wasserstoffgehalt im zusammengeführten Gasgemisch erreicht werden.

Dieser soll zweckmäßig 2% oder kleiner, bevorzugt 1,5% oder kleiner, insbesondere 1% oder kleiner sein, wobei der relative Methangehalt des Gasgemisches über 96% liegen sollte, bevorzugt auch über 97%, insbesondere über 98%.

GB 1 391 034 offenbart ein Verfahren zur Herstellung von Methan, bei dem zwei hintereinandergeschaltete Reinigungsstufen mit der gleichen Waschflüssigkeit betrieben werden.

DE 10 2008 025 224 A1 betrifft die Zusammenführung zweier Waschmittelströme zweier Aminwäschen zu einer Regenerierung.

Unabhängig von der oben erläuterten Gaszusammenführung des ersten und zweiten Gasstroms betrifft die Erfindung ein Verfahren nach Anspruch 1.

Bei diesem Verfahren, bei dem ein Kohlendioxidanteil aus einem ersten Gasstrom, der neben dem Kohlendioxid eine durch katalytische Methanisierung erzeugte Methanmenge enthält, wenigstens teilweise durch eine erste Gaswäsche abgetrennt wird, und wenigstens ein Teil des in einem zweiten, aus einer unterschiedlichen Quelle, insbesondere einer Biogasanlage, stammenden Gasstrom mit hohem Methangehalt enthaltene Kohlendioxid in einer zweiten Gaswäsche abgetrennt wird, erfolgt die Regeneration der jeweiligen Waschflüssigkeit für beide Gaswäschen gemeinsam am gleichen Ort.

Demgemäß wird nicht nur eine Vereinfachung der CO₂-Rückgewinnung erreicht, sondern auch die Möglichkeit für eine einfache Rückführung des wiedergewonnenen CO₂ in die Methanherstellung geschaffen. Bevorzugt kann eine Aminwäsche zum Einsatz kommen, die Erfindung ist jedoch nicht auf eine solche eingeschränkt.

Erfindungsgemäß wird das abgetrennte Kohlendioxid zur Bildung des Eduktgases herangezogen, dessen katalytische Methanisierung die Quelle des ersten Gasstromes bildet. Auf diese Weise wird nicht nur das einspeisbare Gasgemisch mit sehr guter Austauschqualität in gegenüber dem zweiten Gasstrom erhöhter Menge bereitgestellt, sondern auch noch mit verringerter Freisetzung des Treibhausgases Kohlendioxid, welches in diesem Verfahren als Wertstoff angesehen wird.

In einer zweckmäßigen Ausführungsform erfolgt die katalytische Methanisierung unter Überdruck. Dazu kann die bei der Kohlendioxidabtrennung aus dem zweiten Gasstrom erfolgende Kohlendioxid-Rückgewinnung aus der für die Abtrennung verwendeten Waschflüssigkeit bereits unter Überdruck erfolgen, beispielsweise im Bereich von 4 bis 7 bar.

In diesem Zusammenhang ist für die zur Kohlendioxidabtrennung verwendete Technik bevorzugt an die Aminwäsche gedacht. Insbesondere kann die Regeneration der für die Kohlendioxidabtrennung aus dem ersten Gasstrom genutzten aminhaltigen Waschflüssigkeit am gleichen Ort stattfinden wie die der Waschflüssigkeit für den zweiten Gasstrom, d.h. für beide Gasströme können die gleiche Regenerationsanlage, aber getrennte Waschkolonnen vorgesehen werden.

Desweiteren sieht die Erfindung zweckmäßig vor, für die Regeneration der Waschflüssigkeit eine aus der exothermen katalytischen Methanisierungsreaktion gewonnene Wärme zu nutzen, insbesondere über ein in einem Kreislauf geführtes Wärmeträgerfluid, beispielsweise ein Thermoöl. Auf diese Weise kann die Waschflüssigkeitsregeneration, insbesondere Aminregeneration ohne oder nur mit geringer zusätzlicher Energiezufuhr geleistet werden.

Dieser Aspekt der Erfindung wird ebenfalls unabhängig von der Zusammenführung der Gasströme offenbart und als unabhängig schutzfähig angesehen.

Zusammen mit der Erfindung einsetzbar ist ein Verfahren, bei dem ein Eduktgas katalytisch zu einem Produktgas methanisiert wird, das in einem ersten Gasstrom abführbar ist, bei dem die bei der exothermen Methanisierung gewonnene Wärmeenergie für die Regeneration einer Waschflüssigkeit herangezogen wird, welche zum Abtrennen eines Kohlendioxidanteils eines aus einer unterschiedlichen Quelle, insbesondere einer Biogasanlage stammenden methanreichen zweiten Gasstrom dient, wobei insbesondere das bei der Waschflüssigkeitsregeneration wieder freigesetzte Kohlendioxid einen Bestandteil des Eduktgases für die katalytische Methanisierung bildet.

Daneben kann, falls zweckmäßig oder erforderlich, für die Waschflüssigkeitsregeneration auch Wärme genutzt werden, die aus der Verbrennung eines vor der CO₂-Abtrennung aus dem zweiten Gasstrom abgezweigten Gasanteils gewonnen wird, insbesondere mittels eines Blockheizkraftwerkes.

In einer besonders bevorzugten Auführungsform ist der Ursprung des zweiten Gasstroms eine Biogasanlage, ggf. einschließlich bereits enthaltener Entschwefelung des Rohbiogases oder auch weiterer Reinigung des Rohbiogases. Diese Quelle eignet sich insbesondere für einen nach Kohlendioxidabtrennung niedrigen Wasserstoff- und sehr hohen Methangehalt. Auch lässt sich eine bereits bestehende Biogasanlage mit nachgeschalteter Gasaufbereitung mittels einer gemäß einem der obigen Verfahrensaspekte durchgeführten katalytischen Methanisierung geeignet nachrüsten, wodurch die gesamte einspeisbare Gasmenge erhöht und die Freisetzung des schädlichen CO₂ verringert werden kann.

In diesem Zusammenhang kann auch zweckmäßig vorgesehen werden, der Biogasanlage und/oder einer dieser vorgeschalteten Anlage, beispielsweise einer Hygienisierungsanlage für Biogas-verwertbaren Abfall Wärme zuzuführen, die aus einer elektrolytischen Wasserstofferzeugung entsteht, wobei der erzeugte Wasserstoff ein Teil des Eduktgases für die katalytische Methanisierung ist.

Auch dieser Aspekt ist wie die oben erläuterte gemeinsame Waschflüssigkeitsregeneration und der Wärmebereitstellung für die Regeneration hier explizit als unabhängig von der Zusammenführung der beiden Gasströme vor der Konditionierung offenbart.

Zur bakteriellen Vorentschwefelung des in der Biogasanlage erzeugten Rohbiogases kann auch Sauerstoff verwendet werden, welcher bei der elektrolytischen Wasserstofferzeugung miterzeugt wird. Auch diese weitere Synergie ist hier explizit als unabhängig von der gemeinsamen Zusammenführung der beiden Gasströme offenbart und wird als unabhängig schützbar angesehen.

In einer weiteren zweckmäßigen Ausgestaltung des Verfahrens wird das Mengenverhältnis und/oder die Absolutvolumenströme des ersten und zweiten Gasstroms der Zusammenführung aufgezeichnet und insbesondere abgespeichert. Auf diese Weise kann der jeweilige Beitrag der einzelnen Gasströme zu dem gemeinsam gebildeten und eingespeisten Gasgemisch festgehalten werden und für eine getrennte Bilanzierung und Abrechnung herangezogen werden. Dies ist auch dann wichtig, wenn die Bereitstellung der beiden Gasströme in einer Hand liegt, der unterschiedliche Ursprung der Gasströme aber zu einer unterschiedlichen bilanziellen Bewertung bei gleicher eingespeister Gasmenge führt.

In vorrichtungstechnischer Hinsicht schlägt die Erfindung eine Anlage nach Anspruch 10 vor.

Die Anlage ist insbesondere auch für die Realisierung der oben beschriebenen weiteren Verfahrensaspekte ausgelegt und weist dazu entsprechende Einrichtungen und/oder Leitungen auf, wie in Anspruch 11 aufgelistet.

Desweiteren wird auch ein ein- oder mehrstufiger, insbesondere zweistufiger Methanisierungsreaktor für den Einsatz in einer solchen Anlage zur Durchführung des erfindungsgemäßen Verfahrens bereitgestellt, bzw. die Verwendung eines Methanisierungsreaktors zur Durchführung des erfindungsgemäßen Verfahrens offenbart, insbesondere als eine bauliche Einheit zusammen mit einem Elektrolyseur zur Herstellung des in dem Methanisierungsprozess umgewandelten Wasserstoffes.

Weitere Merkmale, Einzelheiten und Vorteile der Erfindung ergeben sich aus der nachfolgenden, anhand der Zeichnung erfolgenden detaillierten Beschreibung eines Ausführungsbeispiels der Erfindung.

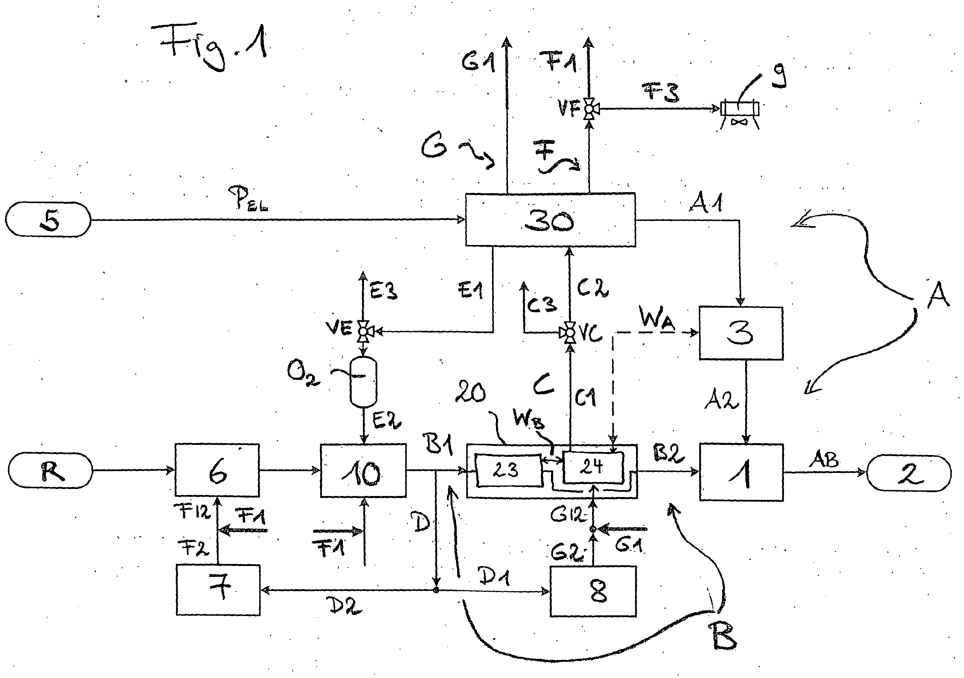

Die einzige Figur 1 der Zeichnung stellt schematisch eine aus mehreren Komponenten bestehende Anlage dar, anhand der das erfindungsgemäße Verfahren in einer konkreten Ausführung erläutert wird.

Die dargestellte Anlage wandelt bilanziell einen zur Biogaserzeugung verwertbaren Abfall R als Rohstoff unter Nutzung einer von einem Stromnetz 5 bereitgestellten elektrischen Leistung P_{EL} in ein in ein Gasnetz 2 einspeisbares Gasgemisch AB mit sehr hohem Methangehalt und sehr niedrigem Wasserstoffgehalt, ohne dabei (jedenfalls bei Verfügbarkeit der elektrischen Leistung P_{EL}) nennenswerte Mengen an Kohlendioxid freizusetzen.

Das in das Gasnetz 2 eingespeiste Gas (Gasgemisch) AB wird in diesem Ausführungsbeispiel in einem Volumenstrom von 925 Normkubikmeter pro Stunde (Nm³/h) als Erdgas-Substitut in Austauschgasqualität in das Gasnetz 2 eingespeist. Es weist einen Methangehalt von mehr als 98 % auf, und hat einen Wasserstoffanteil und einen Kohlendioxidanteil von jeweils weniger als 1%. Zudem wird das einzuspeisende Gas AB in einer Einspeiseanlage 1 auf die Einspeisebedingungen konditioniert, denen das Gasnetz 2 unterliegt. Diese beinhaltet in per se bekannter Weise ggf. eine Trocknung des Gases, eine Brennwerteinstellung auf den geforderten Brennwert unter Zugabe beispielsweise von Butan oder Propan, sowie eine Druckerhöhung des Gases zur Druckanpassung an das Gasnetz 2. Gegebenenfalls wird in der Einspeiseanlage 1 dazu auch durch geeignete bekannte Mess-Systeme die Gasqualität/-zusammensetzung und/oder weitere Parameter gemessen, um die Konditionierung geeignet durchzuführen.

Das zu konditionierende Gas wird hier aus zwei aus unterschiedlichen Quellen stammenden Gasströmen gebildet, die an der Einspeisanlage 1 zusammengeführt werden. Für eine andere Realisierung der Aspekte einer gemeinsamen Waschflüssigkeitregeneration und/oder Wärmekopplung zwischen Methanisierung und Gasherstellung /-aufbereitung kann auch eine nicht dargestellte getrennte Konditionierung und Einspeisung ins Gasnetz erfolgen.

Zunächst wird der erste Gasstrom A beschrieben, welcher der Einspeisanlage 1 in einem Gasvolumenstrom von in diesem Ausführungsbeispiel etwa 330 ± 3 Nm³/h zugeführt wird.

Quelle des ersten Gasstroms A ist eine mit in diesem Ausführungsbeispiel 6,3 MW betriebene Konvertierungsanlage 30, dessen wesentliche Bestandteile ein Elektrolyseur zur Herstellung von Wasserstoff unter Nutzung der vom Stromnetz 5 bereitgestellten elektrischen Leistung P_{EL} und ein beispielsweise zweistufig ausgeführter und unter Überdruck arbeitender Reaktor, in dem ein Eduktgas aus dem elektrolytisch bereitgestellten Wasserstoff sowie zugeführtem Kohlendioxid in für sich bekannter Weise katalytisch methanisiert wird. Das am Ausgang des Methanisierungsreaktors der Konvertierungsanlage 30 erzeugte Produktgas wird in einem Abschnitt A1 des ersten Gasstroms A unter Überdruck, in diesem Ausführungsbeispiel etwa 5 bar und einem Gasvolumenstrom von 350 Nm³/h in bis auf de facto vernachlässigbare Restbestandteile folgender Zusammensetzung einer Waschkolonne 3 zugeführt: 92% CH₄, 2% H₂, 6% CO₂.

Um ein Produktgas in dieser Zusammensetzung zu erreichen, wird die katalytische Methanisierung hin zu geringen Wasserstoffgehalten im Produktgas gesteuert, beispielsweise durch Abweichung der Eduktgaszusammensetzung von dem für die Reaktionsgleichungen der Methanisierung vorgegebenen stöchiometrischen Verhältnis in Form eines Kohlendioxidüberschusses.

In der Waschkolonne 3 wird ein Großteil des in dem ersten Gasstrom A im ersten Abschnitt A1 enthaltenen Kohlendioxids abgetrennt. In diesem Ausführungsbeispiel kommt dazu eine Aminwäsche als Abtrenntechnologie zum Einsatz, und der Betrieb der Waschkolonne 3 wird ebenfalls bei Überdruck, hier ca. 5 bar vorgenommen. Aufgrund der Ausnutzung des bereits im Abschnitt A1 des ersten Gasstroms A herrschenden Drucks kann die Waschkolonne 3 kleiner dimensioniert werden, als es beispielsweise unter atmosphärischen Bedingungen der Fall wäre.

In einem an den Ausgang der Waschkolonne 3 angrenzenden weiteren Abschnitt A2 hat der erste Gasstrom A in diesem Ausführungsbeispiel noch einen Gasvolumenstrom von ca. 330 ± 3 Nm³/h und eine Zusammensetzung von ca. 97% Methan, 2% Wasserstoff und 1% Kohlendioxid.

Nunmehr wird der der Einspeiseanlage 1 in einem Volumenstrom von etwa 600 Nm³/h ebenfalls zugeführte und dort mit dem ersten Gasstrom A zusammengeführte zweite Gasstrom B beschrieben.

Ursprung des zweiten Gasstroms B ist in diesem Ausführungsbeispiel eine Biogasanlage 10, welche hier in der Lage ist, einen zu Biogas verwertbaren Abfall R als Rohstoff zu verarbeiten. Vor Zufuhr des Abfalls R in die Biogasanlage 10 wird dieser jedoch noch einer Hygienisierung 6 unterzogen, bei der etwaige vorhandene Keime durch Erhitzung auf ca. 90° abgetötet werden.

Die Biogasanlage 10 wird derart betrieben, dass an deren Ausgang ein Gasvolumenstrom von 1000 Nm³/h eines bereits in der Biogasanlage 10 entschwefelten und dort oder nachgeschaltet gereinigten Rohbiogases entsteht. Je nach Art des zugeführten Rohstoffes R wird der Methangehalt und der Kohlendioxidgehalt des Rohbiogases, d.h. dessen bis auf in sehr geringen Mengen enthaltenen Restkomponenten und Verunreinigungen enthaltenen Hauptkomponenten variieren. Diese Variation ist aber für das Weitere von untergeordneter Bedeutung, da dem ersten Abschnitt B1 des zweiten Gasstroms B eine Gasaufbereitungsanlage 20 nachgeschaltet ist, in welcher ohnehin der Großteil des im zweiten Gasstrom B enthaltenen Kohlendioxids z. B. auch unter atmosphärischen Bedingungen abgetrennt wird. Die in diesem Ausführungsbeispiel durch eine Aminwäsche realisierte Aufbereitung, in deren Waschkolonne 23 die aminhaltige Waschflüssigkeit das im Gas enthaltene Kohlendioxid aufnimmt und anschließend in deren Aminregeneration 24 unter Erhitzung wieder freigibt, ist Bestandteil der Gasaufbereitungsanlage 20. Die Aminwäsche per se ist in der Technik bekannt und wird hier nicht weiter beschrieben. Es könnten auch andere Waschverfahren wie oben erläutert herangezogen werden.

Die Gasaufbereitungsanlage 20 is in diesem Ausführungsbeispiel auf einen hohen Abtrenngrad ausgelegt, so dass der zweite Gasstrom B im auf die Gasaufbereitung folgenden Abschnitt B2 bei einem Gasvolumenstrom von ca. 600 Nm³/h einen Methangehalt von ca. 99% aufweist, und neben den unvermeidlichen in vernachlässigbarer Menge enthaltenen Restbestandteilen nur noch einen Kohlendioxidgehalt von ca. 1% aufweist.

Die Zusammensetzung des nach der Zusammenführung des ersten Gasstroms A und des zweiten Gasstroms B erhaltenen und in der Einspeiseanlage 1 zu konditionierende Gasgemisch hängt somit neben den Zusammensetzungen der einzelnen Gasströme auch von deren Gasvolumenströmen ab. In diesem Ausführungsbeispiel ist das Verhältnis der Gasvolumenströme des ersten Gasstroms A zum zweiten Gasstrom B näherungsweise 1:2, wodurch sich der relative Wasserstoffgehalt des Endgemisches AB im Vergleich zum relativen Wasserstoffgehalt im Abschnitt A2 des ersten Gasstroms A verringert und nur noch 1% oder weniger beträgt. Auch wird bei diesem Ausführungsbeispiel der Methangehalt des Endgemisches AB im Vergleich zu dem des ersten Gasstroms A im Abschnitt A2 noch auf über 98% erhöht.

Je nach dem für das einzuspeisende Gas AB einzustellenden Wasserstoffgehalt und den Gaszusammensetzungen der Ströme A und B werden entsprechend die Gasvolumenströme des ersten Gasstroms A im Abschnitt A2 und des zweiten Gasstroms B im Abschnitt B2 in Abhängigkeit des im ersten Gasstroms enthaltenen Wasserstoff geeignet reguliert bzw. die Konvertierungsanlage 30 in Relation zur Biogasanlage 10 entsprechend dimensioniert.

Ein Teil des Rohbiogases kann im Bereich des ersten Abschnitts B1 des zweiten Gasstroms B abgezweigt werden, wobei das abgezweigte Rohbiogas D über einen Leitungsabschnitt D1 beispielsweise einem Blockheizkraftwerk 8 zur direkten Verfeuerung und Wärmeproduktion zugeführt werden kann.

Daneben kann die von dem Blockheizkraftwerk 8 erzeugte Wärme unmittelbar für die Aminregeneration 24 herangezogen werden (Leitungen G2, G12), während die vom Blockheizkraftwerk 8 erzeugte elektrische Energie entweder vor Ort genutzt oder ggf. in das Stromnetz einspeisbar ist. Optional könnte das abgezweigte Rohbiogas D auch zusätzlich oder alternativ in einem Gaskessel 7 verfeuert werden, um die für die Hygienisierung 6 erforderliche Wärmemenge zu liefern (Leitungen F2 und F12).

Die von den einzelnen Gasströmen A und B stammenden Gasmengen werden aus geeigneten Messdaten direkt bestimmt oder indirekt abgeleitet, um entsprechend das dem Gasnetz 2 eingespeiste Gasgemisch bilanziell den unterschiedlichen Quellen zuordnen zu können. Dies ist nicht erforderlich in der Alternative der getrennten Einspeisung, bei der die relevanten Daten ohnehin in den dann eigenständigen Einspeisestationen erhoben werden.

Grundsätzlich könnten die beiden Gasströme A und B ohne weitere Wechselwirkung der in die Gasströme eingeschalteten Komponenten erfolgen. Das Ausführungsbeispiel sieht jedoch noch optional einzeln oder in Kombination verwirklichbare Kopplungen vor, welche im folgenden beschrieben werden:
Zunächst ist in diesem Ausführungsbeispiel eine Gasleitung C vorgesehen, um von der Aminregeneration 24 der Gasaufbereitungsanlage 20 des zweiten Gasstroms B das bei der Regeneration der aminhaltigen Waschflüssigkeit freigesetzte Kohlendioxid der Konvertierungsanlage 30 des ersten Gasstroms A zuzuführen, um das für die katalytische Methanisierung erforderliche Kohlendioxid ganz oder teilweise bereitzustellen. Dabei kann die Aminregeneration bereits unter Überdruck, beispielsweise 4 bis 7 bar durchgeführt werden, um das Kohlendioxid bereits vorverdichtet bereitzustellen.

In diesem Ausführungsbeispiel ist im an die Aminregeneration angrenzenden Leitungsabschnitt C1 ein Kohlendioxidstrom von ca. 400 Nm³/h unter 4 bis 7 bar bereitgestellt, von dem bei der Anlagendimensionierung in diesem Ausführungsbeispiel im Abschnitt C2 etwa 330-360 Nm³/h (CO₂ 325 + CO₂-Überschuss) als Eduktgasbestandteil für die katalytische Methanisierung der Konvertierungsanlage 30 zugeführt werden. Zur entsprechenden Regulierung ist eine Ventilanordnung VC in die Kohlendioxidleitung C eingesetzt, mit der ein überschüssiger Kohlendioxidanteil C3 ausgeschleust werden kann.

Desweiteren ist in diesem Ausführungsbeispiel eine Realisierung des weiteren Erfindungsaspekts vorgesehen, die in der Gasaufbereitungsanlage 20 des zweiten Gasstroms B bereitgestellte Aminregeneration 24 auch für die erforderliche Regeneration der in der Waschkolonne 3 im ersten Gasstrom A durchgeführten Aminwäsche zu nutzen. Dies wird durch eine Zirkulationsleitung W_{A} zum Austausch von Aminwaschflüssigkeit zwischen der Waschkolonne 3 und der Aminregeneration 24 erreicht. Diese ist wie die Zirkulationsleitung W_{B} nur schematisch dargestellt.

Im Elektrolyseur der Konvertierungsanlage 30 entsteht neben dem für die katalytische Methanisierung als Eduktgasbestandteil genutzten Wasserstoffs noch Sauerstoff, bei diesem Ausführungsbeispiel in einer Menge von 625 Nm³/h, welcher prinzipiell nach außen freigegeben werden könnte, oder anderweitig abgeführt oder abgefüllt werden könnte. Vor einer solchen etwaigen Weiternutzung wird in diesem Ausführungsbeispiel jedoch mittels einer Ventilanordnung VE ein Teil E2 des erzeugten Sauerstoffstroms E1 abgeführt und in einer Menge von etwa 3 Nm³/h für die in der Biogasanlage 10 durchgeführte Entschwefelung des darin erzeugten Gases genutzt. Desweiteren kann auf diese Weise ein aerober Zersetzungsprozess in der Biogasanlage 10 unter Vermeidung einer Stickstoffzufuhr gefördert werden. Die verbleibende Menge E3 des erzeugten Sauerstoffes von in diesem Ausführungsbeispiel ca. 622 Nm³/h kann dann wie oben beschrieben geeignet weitergenutzt werden.

Neben diesen Verschaltungen der synergetischen Nutzung und des Austausches von Gasen/Waschflüssigkeiten zwischen den mit dem ersten Gasstrom A und dem zweiten Gasstrom B zusammenhängenden Komponenten ist in diesem Ausführungsbeispiel noch ein Nutzwärmekreislauf G vorgesehen, mit Hilfe dessen ein Teil der in der Konvertierungsanlage 30 anfallende Abwärme für die Aminregeneration 24 in der Gasaufbereitungsanlage 20 herangezogen wird. So wird die bei der exotherm ablaufenden Methanisierung im Methanisierungsreaktor der Konvertierungsanlage 30 gewonnene Abwärme mittels eines zirkulierenden Thermoöls, das auf einem Temperaturniveau von hier 170°C bereitgestellt wird, für die Aminregeneration 24 herangezogen, bei einer Nutzwärmeleistung von in diesem Ausführungsbeispiel zwischen 300 und 600 kW (Leitungen G1 und G12). Dadurch gelangt mehr nutzbares CO₂ in den Methanisierungsprozeß, das anderweitig über den abgezweigten Gasstrom D ungenutzt bliebe.

Desweiteren ist vorgesehen, dass die Konvertierungsanlage 30 auf einem geringeren Temperaturniveau, in diesem Ausführungsbeispiel 70° Nutzwärme F im Leistungsumfang hier bis zu 2000 kW bereitstellt, die beispielsweise für die Biogasanlage 10 genutzt wird, aber auch einen Beitrag zur Erhitzung bei der Hygienisierung 6 leisten kann. Dies ist in der Figur durch den Leitungsabschnitt F1 angezeigt. Zur Sicherstellung der ausreichenden Wärmeabfuhr ist in den Nutzwärmekreislauf F über eine Ventilanordnung VF und die Leitung F3 noch eine Rückkühlung 9 von Überschusswärme einkoppelbar.

Die oben erläuterten Synergien über die gemeinsame Aminregeneration 24 über die Austauschzirkulationsleitung W, die Nutzwärmebereitstellung G auf einem relativ hohen Temperaturniveau, die Nutzwärmebereitstellung F auf relativ niedrigem Temperaturniveau kann auch dann geeignet zum Einsatz kommen, wenn der erste Gasstrom A und der zweite Gasstrom B nicht über eine gemeinsame Einspeiseanlage 1 dem Gasnetz 2 zugeführt werden, sondern auch bei getrennter Zuführung zum Gasnetz 2 über separate Einspeiseanlagen.

Desweiteren kann durch nachträglichen Anbau der Konvertierungsanlage 30 und deren oben beschriebenen Ankopplungen an einen bereits vorhandenen Gaseinspeisestrang B (Biogasanlage 10, Gasaufbereitungsanlage 20, Einspeiseanlage) auch eine bereits existente Anlage nachgerüstet werden, wodurch die Möglichkeit geschaffen wird, zum einen bei der Erzeugung des ins Gasnetz 2 einzuspeisenden Gases die Freisetzung des schädlichen Klimagases CO₂ zu verringern oder sogar gänzlich zu vermeiden.

Desweiteren kann, um den Aufwand an erforderlicher elektrischer Energie P_{EL} zu verringern, der aus dem Stromnetz 5 abzuziehen ist, die Konvertierungsanlage 30 auch im intermittierenden Betrieb gefahren werden, wobei die Anlage 30 auf voller Leistung läuft, wenn aus dem Stromnetz 5 überschüssige, aus regenerativen Quellen (Wind/Sonne) eingespeiste Netzleistung im Überschuss vorhanden ist und abgezogen wird, wodurch das Netz auch stabilisiert wird, während sie abgeschaltet wird oder bei geringerer Leistung gefahren wird, falls die Bereitstellung der elektrischen Leistung P_{EL} in gesamtenergetischer Betrachtung als ungünstig angesehen wird.

Die in der Beschreibung der Figur angegebenen Einzelheiten und Merkmale sind nicht als Einschränkung der Erfindung auszulegen. Vielmehr können die in der Beschreibung und den Ansprüchen offenbarten Merkmale einzeln sowie in Kombination für die Verwirklichung der Erfindung in ihren verschiedenen Ausführungsformen wesentlich sein.

## Patentansprüche

1. Verfahren, bei dem ein Kohlendioxidanteil aus einem ersten Gasstrom (A), der neben dem Kohlendioxid eine durch katalytische Methanisierung erzeugte Methanmenge enthält, wobei diese katalytische Methanisierung eines Eduktgases die Quelle des ersten Gasstroms (A) bildet, wenigstens teilweise durch eine erste Gaswäsche abgetrennt wird, und wenigstens ein Teil des in einem zweiten, aus einer unterschiedlichen Quelle stammenden methanreichen Gasstrom (B) enthaltene Kohlendioxid in einer zweiten Gaswäsche abgetrennt wird, wobei die Regeneration der jeweiligen Waschflüssigkeit für beide Gaswäschen gemeinsam am gleichen Ort (24) erfolgt und wobei aus dem zweiten Gasstrom (B) abgetrenntes Kohlendioxid zur Bildung des Eduktgases herangezogen wird.

2. Verfahren nach Anspruch 1, bei dem beide Gaswäschen als Aminwäsche mit aminhaltiger Waschflüssigkeit durchgeführt werden.

3. Verfahren nach Anspruch 1 oder 2, bei dem für die Regeneration der Waschflüssigkeit eine aus der exothermen katalytischen Methanisierungsreaktion gewonnene Wärme genutzt wird, insbesondere über ein in einem Kreislauf geführtes Wärmeträgerfluid.

4. Verfahren nach einem der Ansprüche 1 bis 3, bei dem für die Regeneration der Waschflüssigkeit eine aus der Verbrennung eines vor der CO₂ Abtrennung aus dem zweiten Gasstrom abgezweigten Gasanteils gewonnene Wärme genutzt wird.

5. Verfahren nach einem der vorhergehenden Ansprüche, bei dem die Quelle des zweiten Gasstroms eine Biogasanlage (10) ist.

6. Verfahren nach Anspruch 5, bei dem der Biogasanlage (10) und/oder einer dieser vorgeschalteten Anlage Wärme zugeführt wird, welche bei einer elektrolytischen Wasserstofferzeugung entsteht, wobei der erzeugte Wasserstoff ein Teil des Eduktgases für die katalytische Methanisierung ist.

7. Verfahren nach Anspruch 5 oder 6, bei dem zur bakteriellen Vorentschwefelung des in der Biogasanlage erzeugten Rohbiogases Sauerstoff herangezogen wird, welcher bei einer elektrolytischen Wasserstofferzeugung miterzeugt wird, wobei der erzeugte Wasserstoff ein Teil des Eduktgases für die katalytische Methanisierung ist.

8. Verfahren nach einem der vorhergehenden Ansprüche, bei dem aus dem zweiten Gasstrom abgetrenntes Kohlendioxid der katalytischen Methanisierung in verdichteter Form zugeführt wird.

9. Verfahren nach Anspruch 8, bei dem sich die verdichtete Form durch eine unter Überdruck, insbesondere unter 4-7 bar, vorgenommene Regeneration einer bei der Abtrennung verwendeten Waschflüssigkeit ergibt.

10. Anlage zum Bereitstellen zweier methanreicher Gasströme (A, B), mit
einem ersten Gaserzeugungssystem (30) in Form eines einen Katalysator aufweisenden Methanisierungsreaktors zur Erzeugung eines ersten (A) der Gasströme,
einem zweiten Gaserzeugungssystem (10), insbesondere in Form einer Biogasanlage, zur Erzeugung eines zweiten (B) der Gasströme,
einer Gasaufbereitung (3, 20), die zum Einen eine jeweils separate Gasabtrenneinrichtung (3; 23) zur Abtrennung von Kohlendioxid, aus den jeweiligen Gasströmen und zum Anderen eine gemeinsame Regenerationseinrichtung (24) zur gemeinsamen Wiedergewinnung jeweilig abgetrennten Kohlendioxids aus der verwendeten Waschflüssigkeit am gleichen Ort aufweist, und einem Leitungssystem mit Abschnitten zur Verbindung (A1; B1) der Ausgänge der Gaserzeugungssysteme mit den Eingängen der jeweiligen Gasabtrenneinrichtung, zur Verbindung (W_{A}, W_{B}) der Waschflüssigkeitsausgänge der jeweiligen Gasabtrenneinrichtung (3; 23) zum Eingang der gemeinsamen Regenerationseinrichtung (24), wobei letztere Abschnitte (W_{A}, W_{B}) mit einer fortgesetzten Verbindung des Ausgangs der gemeinsamen Regenerationseinrichtung (24) zu den Waschflüssigkeitseingängen der jeweiligen Gasabtrenneinrichtung (3; 23) jeweils zur Zirkulation der Waschflüssigkeit ausgelegt sind, und wobei das Leitungssystem eine Leitung (C) von der Waschflüssigkeitsregeneration (24) zum Eingang des Methanisierungsreaktors zur Kohlendioxidzufuhr aufweist.

11. Anlage nach Anspruch 10, die insbesondere zur Durchführung eines Verfahrens gemäß einem der Ansprüche 1-9 ausgelegt ist und deren Steuereinrichtung entsprechend steuerbar ist, wobei die Anlage dazu insbesondere aufweist:
einen Elektrolyseur, insbesondere als bauliche Einheit (30) zusammen mit dem Methanisierungsreaktor,
eine/die in die erste Gasleitung (A1, A2) eingesetzte erste Einrichtung (3) zur Gasabtrennung, insbesondere Aminwäsche,
eine/die an die zweite Gasleitung (B2) angekoppelte zweite Einrichtung (20) zur Gasabtrennung einschließlich einer Regenerationseinrichtung (24) zur Regeneration der Waschflüssigkeit der zweiten (23) und optional ersten (3) Gasabtrennung,
ein Wärmeleitungssystem (F, G) zur Leitung von Wärme von dem Methanisierungsreaktor und/oder dem Elektrolyseur zu der an die zweite Leitung angekoppelten Gasaufbereitung und/oder einem dieser vorgelagerten Ursprung (10) der zweiten Gaerzeugungseinrichtung, und/oder
eine Messeinrichtung zur Messung der Eigenschaften des Gasgemisches nach der Zusammenführung der Gasströme und/oder der Messung und Aufzeichnung des Mischverhältnissess und/oder von Absolutmengen des ersten und zweiten Gasstroms
und wobei das Gasleitungssysem insbesondere die folgenden weiteren Leitungen aufweist:
eine vierte Leitung (W_{A}) von der in die erste Leitung eingekoppelten ersten Gasabtrennung (3) zur in der an die zweite Leitung angekoppelten zweiten Gasaufbereitung (20) enthaltenen Waschflüssigkeitsregeneration (24), und/oder
eine fünfte Leitung (E) von einem dem Methanisierungsreaktor zuarbeitenden Elektrolyseur zur Ableitung von Sauerstoff und insbesondere Zuführung von Sauerstoff zu einem als Biogasanlage (10) ausgeführten Bestandteil der zweiten Gaserzeugungseinrichtung.

## Claims

1. A method in which a carbon dioxide fraction is at least partially separated by a first gas scrubbing from a first gas stream (A) which, in addition to the carbon dioxide contains an amount of methane produced by catalytic methanation, said catalytic methanation of a reactant gas being the source of the first gas stream (A), and at least a part of the carbon dioxide contained in a second methane-rich gas stream (B) originating from a different source is separated in a second gas scrubbing, wherein the regeneration of the respective washing liquid for both gas scrubbings takes place together at the same location (24) and wherein the carbon dioxide separated from the second gas stream (B) is used to form the reactant gas.

2. The method according to claim 1, wherein both gas scrubbings are carried out as amine scrubbings with amine-containing washing liquid.

3. The method according to claim 1 or 2, wherein heat recovered from the exothermic catalytic methanation reaction is used as a heat transfer fluid to regenerate the washing liquid, in particular via a heat transfer fluid in circulation.

4. The method according to one of claims 1 to 3, wherein heat recovered from the combustion of a gas fraction branched off from the second gas stream before CO₂ separation is used to regenerate the washing liquid.

5. The method according to one of the preceding claims, wherein the source of the second gas stream is a biogas plant (10).

6. The method according to claim 5, wherein heat is provided to the biogas plant (10) and/or to a plant upstream of said biogas plant, said heat originating from an electrolytic hydrogen production, wherein the hydrogen produced is part of the reactant gas for said catalytic methanation.

7. The method according to claim 5 or 6, wherein oxygen co-produced during electrolytic hydrogen production is used for the bacterial pre-desulfurization of the raw biogas produced in the biogas plant, and wherein the hydrogen produced is part of the reactant gas for said catalytic methanation.

8. The method according to one of the preceding claims, wherein carbon dioxide separated from the second gas stream is fed to said catalytic methanation in compressed form.

9. The method according to claim 8, wherein the compressed form results from regeneration under positive pressure, in particular under 4-7 bar, of a washing liquid used in the separation process.

10. Plant for providing two methane-rich gas streams (A, B), with
a first gas generation system (30) in the form of a methanation reactor, comprising a catalyst, for generating a first (A) of the gas streams,
a second gas generation system (10), in particular in the form of a biogas plant, for generating a second (B) of the gas streams,
a gas treatment system (3, 20) comprising on the one hand a respective separate gas separation device (3; 23) for separating carbon dioxide from each gas stream, and on the other hand a common regeneration device (24) for a joint recovery, at the same location, of the carbon dioxide respectively separated from the washing liquid used, and
a conduit system with sections for connecting (A1; B1) the outlets of the gas generation systems with the inlets of the respective gas separation device, for connecting (W_{A}, W_{B}) the washing liquid outlets of the respective gas separation device (3; 23) to the inlet of the common regeneration device (24), wherein said sections (W_{A}, W_{B}) with a continued connection of the outlet of the common regeneration device (24) to the washing liquid inlets of the respective gas separation device (3; 23) are each adapted to circulate the washing liquid, and wherein the conduit system comprises a conduit (C) from the washing liquid regeneration device (24) to the inlet of the methanation reactor for carbon dioxide supply.

11. Plant according to claim 10, which is adapted in particular for implementing the method of one of claims 1-9 and whose control device can be controlled accordingly, wherein the plant comprises for this purpose in particular:
an electrolyser, in particular as a structural unit (30) together with the methanation reactor,
a/the first device (3) for gas separation, arranged in the first gas conduit (A1, A2), in particular an amine scrubber,
a/the second device (20) for gas separation, coupled to the second gas conduit (B2), including a regeneration device (24) for regenerating the washing liquid of the second (23) and optionally first (3) gas separation device,
a heat conduit system (F, G) for conducting heat from the methanation reactor and/or the electrolyser to the gas treatment system coupled to the second conduit and/or to a source (10), upstream of the gas treatment system, for the second gas generating device, and/or
a measuring device for measuring the properties of the gas mixture after the combination of the gas streams and/or for measuring and recording the mixing ratio and/or absolute quantities of the first and second gas flow,
and wherein the gas conduit system comprises in particular the following additional conduits:
a fourth conduit (W_{A}) from the first gas separation device (3) coupled into the first conduit to the washing liquid regeneration device (24) contained in the second gas treatment device (20) coupled to the second conduit, and/or
a fifth conduit (E) from an electrolyser working in the methanation reactor to discharge oxygen and in particular to supply oxygen to a component of the second gas generating device designed as a biogas plant (10).

## Revendications

1. Procédé, dans lequel on sépare, au moins en partie par un premier lavage de gaz, une part de dioxyde de carbone hors d'un premier flux gazeux (A) contenant, outre ledit dioxyde de carbone, une quantité de méthane produite par méthanisation catalytique, ladite méthanisation catalytique d'un réactif gazeux constituant la source du premier flux gazeux (A), et on sépare, au cours d'un deuxième lavage de gaz, au moins une partie du dioxyde de carbone qui est contenu dans un deuxième flux gazeux (B) riche en méthane et provenant d'une source différente ; la régénération du liquide de lavage de chacun des deux lavages de gaz s'effectuant en commun en un même lieu (24), et le dioxyde de carbone séparé du deuxième flux gazeux (B) servant à former le réactif gazeux.

2. Procédé selon la revendication 1, dans lequel les deux lavages de gaz consistent en des lavages aux amines effectuées à l'aide d'un liquide de lavage contenant des aminés.

3. Procédé selon la revendication 1 ou 2, dans lequel, pour la régénération du liquide de lavage, on exploite la chaleur issue de la réaction de méthanisation catalytique exotherme, notamment par le biais d'un fluide échangeur de chaleur circulant en boucle.

4. Procédé selon l'une des revendications 1 à 3, dans lequel, pour la régénération du liquide de lavage, on exploite la chaleur issue de la combustion d'une part de gaz dérivée du deuxième flux gazeux préalablement à la séparation du CO₂.

5. Procédé selon l'une quelconque des revendications précédentes, dans lequel la source du deuxième flux gazeux est une installation de biogaz (10).

6. Procédé selon la revendication 5, dans lequel de la chaleur est apportée à l'installation de biogaz (10) et/ou à une installation située en amont de celle-ci, laquelle chaleur est issue d'une production électrolytique d'hydrogène, ledit hydrogène produit constituant une partie du réactif gazeux pour la méthanisation catalytique.

7. Procédé selon la revendication 5 ou 6, dans lequel la désulfuration bactérienne préalable du biogaz brut produit dans l'installation de biogaz met en oeuvre de l'oxygène coproduit lors d'une production électrolytique d'hydrogène, ledit hydrogène produit constituant une partie du réactif gazeux pour la méthanisation catalytique.

8. Procédé selon l'une quelconque des revendications précédentes, dans lequel du dioxyde de carbone séparé du deuxième flux gazeux est apporté à la méthanisation catalytique sous forme comprimée.

9. Procédé selon la revendication 8, dans lequel ladite forme comprimée résulte d'une régénération, réalisée sous pression accrue, notamment de l'ordre de 4 à 7 bar, d'un liquide de lavage employé lors de la séparation.

10. Installation de production de deux flux gazeux riches en méthane (A, B), comportant :
un premier système de production de gaz (30) sous la forme d'un réacteur de méthanisation présentant un catalyseur, pour la production d'un premier (A) des flux gazeux,
un deuxième système de production de gaz (10), notamment sous la forme d'une installation de biogaz, pour la production d'un deuxième (B) des flux gazeux,
une unité de traitement de gaz (3, 20) présentant d'une part un dispositif de séparation de gaz (3 ; 23) respectif séparé servant à séparer le dioxyde de carbone de chacun des flux de gaz et d'autre part un dispositif de régénération (24) commun servant à récupérer collectivement, en un même lieu, le dioxyde de carbone respectivement séparé du liquide de lavage utilisé, et
un système de conduites présentant des sections destinées à la liaison (A1; B1) de la sortie des systèmes de production de gaz avec l'entrée du dispositif de séparation de gaz respectif, destinées à la liaison (W_{A}, W_{B}) de la sortie de liquide de lavage du dispositif de séparation de gaz (3 ; 23) respectif avec l'entrée du dispositif de régénération (24) commun, ces dernières sections (W_{A}, W_{B}) assurant une liaison continue de la sortie du dispositif de régénération (24) commun avec les entrées de liquide de lavage du dispositif de séparation de gaz (3 ; 23) respectif pour permettre la circulation respective du liquide de lavage ; ledit système de conduites présentant une conduite (C) allant du dispositif de régénération du liquide de lavage (24) jusqu'à l'entrée du réacteur de méthanisation pour l'apport du dioxyde de carbone.

11. Installation selon la revendication 10, notamment conçue pour mettre en oeuvre un procédé selon l'une des revendications 1 à 9, dont le dispositif de commande peut être commandé de manière appropriée, ladite installation présentant notamment à cet effet :
un électrolyseur, formant notamment une unité structurelle (30) avec le réacteur de méthanisation,
un/le premier dispositif (3) mis en oeuvre dans la première conduite de gaz (A1, A2) en vue de la séparation des gaz, notamment un dispositif de lavage aux amines,
un/le deuxième dispositif (20) couplé à la deuxième conduite de gaz (B2) en vue de la séparation des gaz, lequel dispositif comprend un dispositif de régénération (24) pour régénérer le liquide de lavage du deuxième (23) et éventuellement du premier (3) dispositif de séparation des gaz,
un système de conduites de chaleur (F, G) destiné à conduire la chaleur du réacteur de méthanisation et/ou de l'électrolyseur vers l'unité de traitement de gaz couplée à la deuxième conduite et/ou à une source (10), située en amont de cette dernière, du deuxième dispositif de production de gaz, et/ou
un dispositif de mesure destiné à mesurer les propriétés du mélange gazeux après le regroupement des flux gazeux et/ou à mesurer et enregistrer le rapport de mélange et/ou des quantités absolues des premier et deuxième flux gazeux ;
dans lequel le système de conduites de gaz présente notamment les conduites supplémentaires suivantes :
une quatrième conduite (W_{A}) allant du premier dispositif de séparation des gaz (3) couplé à la première conduite jusqu'au dispositif de régénération du liquide de lavage (24) contenu dans le deuxième dispositif de traitement de gaz (20) couplé à la deuxième conduite, et/ou
une cinquième conduite (E) allant d'un électrolyseur à l'appui du réacteur de méthanisation pour prélever de l'oxygène et notamment pour apporter de l'oxygène à un élément du deuxième dispositif de production de gaz conçu sous la forme d'une installation de biogaz (10).
